# EUROPEAN PATENT APPLICATION

(11) **EP 2 103 755 A2**
(43) Date of publication of application: **23.09.2009**
(21) Application number: 08160681.6
(22) Date of filing: 18.07.2008
(51) Int. Cl.: E04D 3/30, E04D 3/362

(54) **Roofing panels**

(30) Priority: 17.03.2008 IT PD20080086
(71) Applicant: Imeco S.R.L., 32032 Feltre (BL) (IT)
(72) Inventor: Turrin, Pierfelice, 32032 Feltre (BL) (IT); Turrin, Matteo, 32032 Feltre (BL) (IT); Turrin, Pierfrancesco, 32032 Feltre (BL) (IT)
(74) Representative: Modiano, Micaela Nadia

(57) **Abstract**

A roofing (10, 100) comprising corrugated sheet metal roofing panels (11, 111) provided
- at a first side, with a main corrugation (13, 113), the profile of which has a head (14) and two shoulders (15) for supporting edges of a solar panel (16), the main corrugation (13, 113) comprising a portion (17, 117) for connection to an adjacent roofing panel (11, 111),
- at the other side (12b), an auxiliary corrugation (18, 118) for connection to an adjacent panel, which is shaped complementarily at least to the connecting portion (17, 117).

Roofing panels (11, 111), mutually connected at the connecting portions (17, 117), define between the main corrugations (13, 113) seats (19, 119) for solar panels (16), which are accommodated thereat and are fully integrated with the roofing (10, 100).

## Description

The present invention relates to a roofing.

Various types of roofing for industrial buildings and facilities are currently known.

These roofings generally have curved tiles, pantiles or the like or metal sheets provided with stiffening corrugations which are superimposed on a thermal insulation layer.

As is known, the need to reduce the consumption of electric power derived from conventional sources by resorting to supplemental energy sources, particularly to meet the demand of industrial users, is currently strongly felt.

One type of so-called supplemental energy source is the electric power generated by solar panels, which are generally fitted on building roofings.

The structure formed by the roofing with the solar panel superimposed thereon is classified as
- fully integrated, if the panel is part of the roofing itself,
- partially integrated, when the panels are superimposed on the roofing, substantially following its inclination and orientation, or
- fully non-integrated, if the panels are supported by a frame which is superimposed on the roofing with an inclination and an orientation which are different from those of the roofing.

The need is currently particularly felt to provide roofings which are fully integrated with solar panels, which therefore form with them a single architectural unit, to the full advantage of the environmental impact and structural economy of the building.

One solution that seeks to fulfill this requirement provides for a roofing which has, above a thermal insulation layer, a corrugated metal sheet shaped so as to retain a solar panel, so as to form a substantially modular monolithic element which is adapted to provide a fully integrated roofing with solar panels.

One drawback of this solution is indeed that the roofing is monolithic and forces the user to install simultaneously the roofing panels with the solar panels integrated therein, the panel types being dedicated to each other.

This solution in fact does not allow the user to use commonly commercially available solar panels according to his/her requirements, but forces the use of the panels that are preassembled with the roofing panels.

The aim of the present invention is to provide a roofing which can be integrated fully with solar panels without however requiring their simultaneous installation.

Within this aim, an object of the invention is to provide a roofing which allows to accommodate in a fully integrated manner solar panels which are commonly commercially available and are not necessarily dedicated to it.

Another object of the invention is to provide a roofing which is simple and easy to use and can be manufactured with low costs.

This aim and these and other objects which will become better apparent hereinafter are achieved by a roofing, characterized in that it comprises corrugated sheet metal roofing panels provided
- at a first side, with a main corrugation, the profile of which has a separation head between two supporting shoulders for edges of a solar panel, said main corrugation comprising a portion for connection to an adjacent roofing panel,
- at a second side, which lies opposite said first side, an auxiliary corrugation for connection to an adjacent panel, the profile of which is shaped complementarily at least to said connecting portion,
said roofing panels, mutually connected at said connecting portions, defining between said main corrugations seats for solar panels, which are supported by them in a manner which is fully integrated with said roofing.

Further characteristics and advantages of the invention will become better apparent from the following detailed description of a preferred but not exclusive embodiment of the roofing according to the invention, illustrated by way of non-limiting example in the accompanying drawings, wherein:

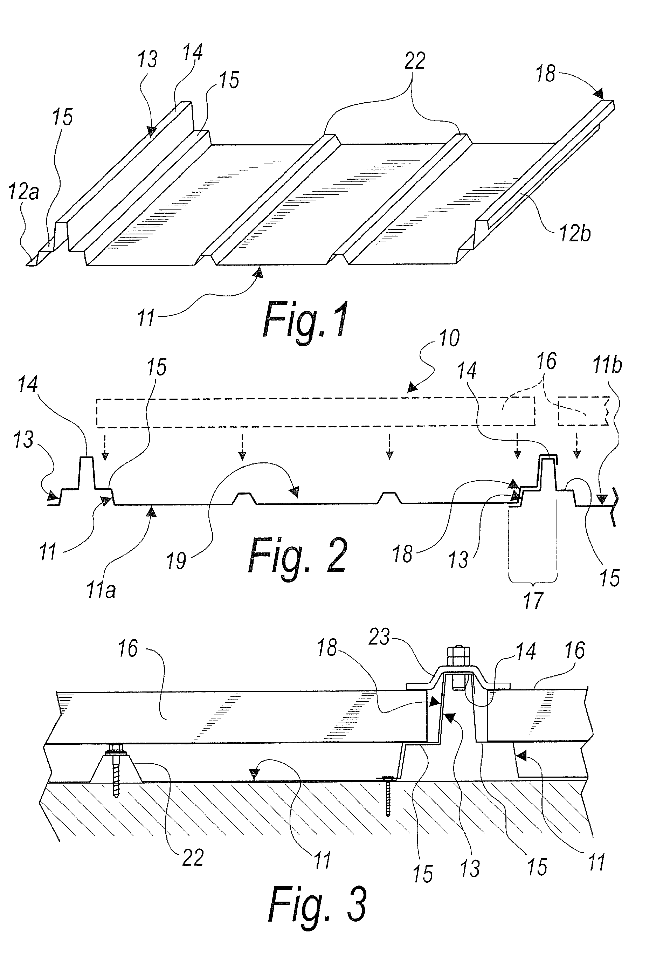

Figure 1 is a view of the profile of a roofing according to the invention in a first embodiment;
Figure 2 is an installation diagram of a roofing according to the invention, in the first embodiment;
Figure 3 is an enlarged-scale partially sectional view of a detail of a roofing, according to the invention;

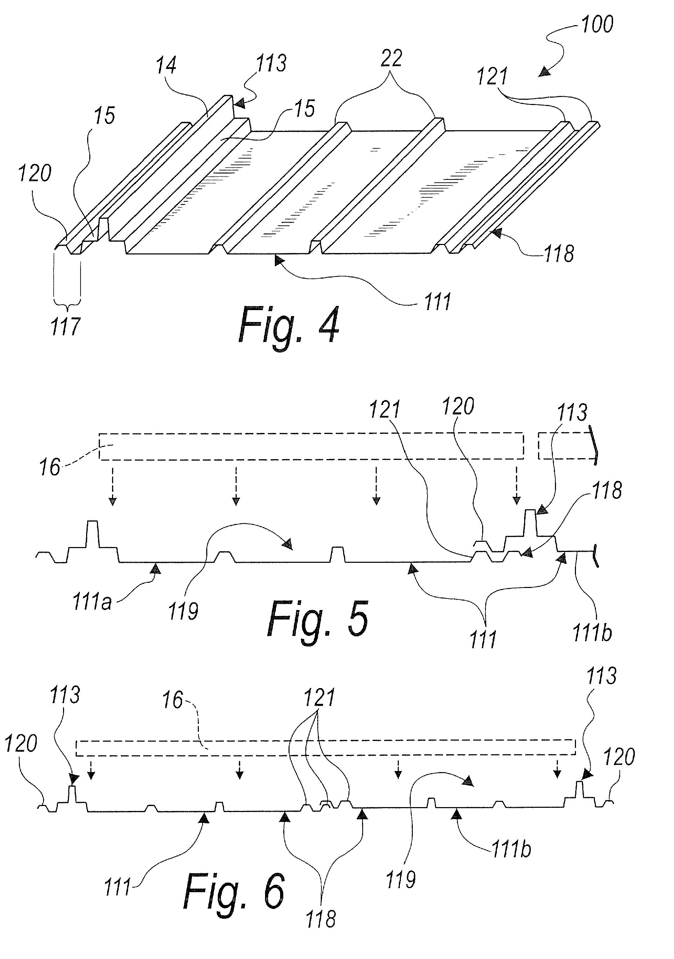

Figure 4 is a view of the profile of a roofing according to the invention in a second embodiment;
Figures 5 and 6 are installation diagrams, according to various configurations, of a roofing according to the invention in the second embodiment.

It is noted that anything found to be already known during the patenting process is understood not to be claimed and to be the subject of a disclaimer.

With reference to the figures, the reference numeral 10 generally designates a roofing which comprises roofing panels 11 made of corrugated sheet metal which have:
- at a first side 12a, a main corrugation 13, whose profile has a separation head 14 provided between two supporting shoulders 15 for edges of a solar panel 16, the main corrugation 13 comprising a portion 17 for connection to an adjacent roofing panel 11,
- at a second side 12b, which lies opposite the first side 12a, an auxiliary corrugation 18 for connection to an adjacent roofing panel 11, whose profile is shaped complementarily at least to the connecting portion 17.

The roofing panels 11, mutually connected at the connecting portions 17, form, between the main corrugations 13, seats 19 for the solar panels 16, which are supported by the main corrugations 13 in a manner in which they are fully integrated in the roofing 10.

In a first embodiment, the connecting portion 17 comprises advantageously at least one of the supporting shoulders 15 and the head 14.

In this embodiment, an auxiliary corrugation 18 of a first one 11a of the roofing panels 11 is shaped complementarily to the connecting portion 17 of a second one 11b of the roofing panels 11 and is adapted to surmount it so as to mutually connect them.

In a second embodiment of the roofing 100 according to the invention, the main corrugation 113 comprises a connecting portion 117, which conveniently has at least one first corrugation 120 for connection to an adjacent roofing panel 111.

In the second embodiment, the auxiliary corrugation 118 conveniently has at least one second corrugation 120 for connection to an adjacent roofing panel 111.

The roofing panels 111 arranged mutually adjacent can therefore be mutually connected according to at least three distinct alternative configurations, of which
- a first configuration has one or more of the first connecting corrugations 120, of a first one 111a of the roofing panels 111, which surmounts, or is surmounted by, a corresponding number of second corrugations 121 for connection of a second roofing panel 111b,
- a second configuration has one or more first connecting corrugations 120 of the first one 111a of the roofing panels 111, which surmounts, or is surmounted by, a corresponding number of first corrugations 120 for connection of the second one 111b of the roofing panels 111,
- a third configuration has one or more second connecting corrugations 121 of the first one 111a of the roofing panels 111, which is surmounted by, or surmounts, a corresponding number of second corrugations 121 for connecting the second one of the roofing panels 111.

Conveniently, for each roofing panel 111 there is a plurality of first connecting corrugations 120 and a plurality of second connecting corrugations 121; in this manner, the connection between adjacent roofing panels 111 can be provided by mutually surmounting one or more first connecting corrugations 120 and/or second connecting corrugations 121, thus forming seats 119 for solar panels 16 which are wider or narrower and thus allow their accommodation according to orientations which are longitudinal or transverse with respect to the extension of the roof.

Advantageously, the roofing panels 11 or 111 have stiffening corrugations 22, which are interposed between the main corrugations 13, or respectively 113, and the auxiliary corrugations 18, or respectively 118, so as to increase their structural strength.

Preferably, means for retaining the solar panels 16 in the seats 19 or 119 are provided which conveniently comprise brackets 23 which are fixed to the heads 14 respectively and abut against the edges of the roofing panels 11 that rest against the shoulders 15, so as to retain them in this position.

Conveniently, means for fixing the roofing panels 11 to a thermal insulation layer or framework are further provided which conveniently comprise screws provided with gaskets adapted to prevent the infiltration of water between the roofing panels 11 and the layer that lies below them.

The use of the roofing 10 according to the invention is as follows.

Roofing panels 11 or 111 are arranged so as to provide the roofing of a building by arranging them mutually adjacent and mutually fixing them according to at least one of said configurations; in this manner, the seats 19 or 119 for the solar panels 16 are provided.

Simultaneously with the installation of the roofing panels 11 or 111, it is possible to arrange the solar panels 16 which are accommodated in the seats 19 or 119 in a manner which is fully integrated with the roofing 10.

As an alternative, the installations of the solar panels 16 can also occur at a later time with respect to the installation of the roofing panels 11 or 111, simply by accommodating the solar panels 16 of a generic commercially available type in the seats 19 or 119 and fixing them therein with the provided brackets 23 or other fixing means.

In this manner, it is possible to obtain a roofing 10 or 100 which is fully integrated with the solar panels 16 and does not require dedicated solar panels 16, or the simultaneous installation of the roofing 10 or 100 together with the solar panels 16.

In practice it has been found that the invention achieves the intended aim and objects, by providing a roofing which is fully integrated with solar panels without however requiring their simultaneous installation.

Further, a roofing according to the invention is more flexible to use than currently known roofings, allowing to accommodate in a fully integrated manner solar panels that are commonly commercially available and are not necessarily dedicated to it.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the contingent shapes and dimensions, may be any according to requirements and to the state of the art.

The disclosures in Italian Patent Application No. PD2008A000086 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A roofing, **characterized in that** it comprises corrugated sheet metal roofing panels (11, 111) provided
- at a first side, with a main corrugation (13, 113), the profile of which has a separation head (14) between two supporting shoulders (15) for edges of a solar panel (16), said main corrugation (13, 113) comprising a portion (17, 117) for connection to an adjacent roofing panel (11, 111),
- at a second side (12b), which lies opposite said first side, an auxiliary corrugation (18, 118) for connection to an adjacent panel, the profile of which is shaped complementarily at least to said connecting portion (17, 117),
said roofing panels (11, 111), mutually connected at said connecting portions (17, 117), defining between said main corrugations (13, 113) seats (19, 119) for solar panels (16), which are supported by them in a manner which is fully integrated with said roofing (10).

2. The roofing according to claim 1, **characterized in that** in a first embodiment said connecting portion (17) comprises at least one of said supporting shoulders (15) and said head (14), said auxiliary corrugations (18), of a first one (11a) of said roofing panels (11), being adapted to surmount said connecting portion (17) of a second one (11b) of said roofing panels (11) for the mutual connection of said first roofing panel (11a) to said second roofing panel (11b).

3. The roofing according to claim 1, **characterized in that** in a second embodiment said connecting portion (117) has at least one first corrugation (120) for connection to an adjacent panel, said auxiliary corrugation (118) having at least one second corrugation (112) for connection to an adjacent panel, adjacent roofing panels (111) of said roofing panels (111) being mutually connectable according to at least three distinct and alternative configurations, of which
- a first configuration has said at least one first corrugation (120) for connection of a first one (111a) of said roofing panels (111) which is surmounted by, or surmounts, said at least one second corrugation (112) for connection of a second one (111b) of said roofing panels (111),
- a second configuration has said at least one first corrugation (120) for connection of a first one (111a) of said roofing panels (111) which is surmounted by, or surmounts, said at least one first corrugation (120) for connection of a second one (111b) of said roofing panels (111),
- a third configuration has said at least one second corrugation (112) for connection of a first one (111a) of said roofing panels (111) which is surmounted by, or surmounts, said at least one second corrugation (112) for connection of a second one (111b) of said roofing panels (111).

4. The roofing according to one or more of claims 1 and 3, **characterized in that** said at least one first connecting corrugation (120) comprises a plurality of first connecting corrugations (120), said at least one second connecting corrugation (121) comprising a plurality of second connecting corrugations (121), a first panel (111a) and a second panel (111b) which are mutually adjacent being mutually connected by surmounting one or more connecting corrugations (120, 121), selected between said first connecting corrugations (120) and said second connecting corrugations (121), of said first panel (111a), on connecting corrugations, selected between said first connecting corrugations (120) and said second connecting corrugations (121), of said second panel (111b).

5. The roofing according to one or more of the preceding claims, **characterized in that** said roofing panels (11, 111) have stiffening corrugations (22), which are interposed between said main corrugations (13, 113) and said auxiliary corrugations (18, 118).

6. The roofing according to one or more of the preceding claims, **characterized in that** it comprises means for retaining solar panels (16) in said seats (19).

7. The roofing according to one or more of the preceding claims, **characterized in that** said retention means comprise brackets (23) which are fixed to said heads (14) and abut against edges of said roofing panels (11, 111) which rest against said shoulders (15), locking them thereat.
